# EUROPEAN PATENT SPECIFICATION

(11) **EP 4 488 555 B1**
(45) Date of publication and mention of the grant of the patent: **20.05.2026**
(21) Application number: 24184939.7
(22) Date of filing: 27.06.2024
(51) Int. Cl.: F16K 11/24, B60N 2/90, F16K 27/00, F16K 31/06

(54) **PNEUMATIC CONTROL APPARATUS FOR VEHICLE SEAT**
PNEUMATISCHE STEUERVORRICHTUNG FÜR FAHRZEUGSITZ
APPAREIL DE COMMANDE PNEUMATIQUE POUR SIÈGE DE VÉHICULE

(30) Priority: 04.07.2023 KR 20230086197
(43) Date of publication of application: 08.01.2025
(73) Proprietor: Hyundai Transys Inc., Chungcheongnam-do 31930 (KR)
(72) Inventor: KANG, Gu Chang, Hwaseong-si, Gyeonggi-do 18463 (KR); LEE, Ui Jeong, Hwaseong-si, Gyeonggi-do 18476 (KR)
(74) Representative: Viering, Jentschura & Partner mbB Patent- und Rechtsanwälte

(56) References cited:
- EP-A1- 3 037 703
- WO-A1-2018/135033

## Description

### CROSS-REFERENCE TO RELATED APPLICATION

This application claims, under 35 U.S.C. §119(a), the benefit of priority from Korean Patent Application No. 10-2023-0086197, filed on July 4, 2023.

### BACKGROUND

### (a) Technical Field

The present disclosure relates to a pneumatic control apparatus for a vehicle seat. More particularly, it relates to a pneumatic control apparatus for a vehicle seat capable of reducing the size of a package of valves adopted to perform an intake/exhaust operation and a maintenance operation.

### (b) Background Art

In general, passengers including a driver of a vehicle often attach cushions or other backrests to existing seats depending on their preferences.

However, since most conventional cushions have a fixed degree of cushioning, the conventional cushions do not appropriately respond to the driver's body shape and preferences. As a result, if a passenger uses the above-mentioned cushion for a long time, side effects due to inappropriate cushioning may affect the passenger.

To this end, a seat cushion and a seatback forming a vehicle seat may have a pneumatic control apparatus mounted therein and configured to variably control the shape of the seating surface using pneumatic pressure.

However, the pneumatic control apparatus performs control only using single pressure through an intake operation or an exhaust operation selectively performed by a basic switch. Accordingly, the pneumatic control apparatus may not sufficiently meet various preferences and needs of users.

In addition, a pneumatic control apparatus including a pressure sensor controls an amount of air through adjustment of critical pressure, and it is required to provide a control circuit and a separate logic for the pressure sensor. In this case as well, there is a problem in that it is difficult to perform precise control due to environmental conditions and limitations in sensor performance.

The above information disclosed in this Background section is only for enhancement of understanding of the background of the disclosure, and therefore it may contain information that does not form the prior art that is already known in this country to a person of ordinary skill in the art.

Conventional pneumatic control apparatuses for vehicle seats are known from EP3037703A1 and from WO2018/135033A1.

### SUMMARY OF THE DISCLOSURE

The present disclosure has been made in an effort to solve the above-described problems associated with the prior art, and it is an object of the present disclosure to provide a pneumatic control apparatus mounted in a vehicle seat and configured to control opening and closing of a flow path in one coil connected to different cells disposed in a seat so as to selectively perform an intake/exhaust operation and a maintenance operation, thereby making it possible not only to reduce the number of valves adopted to control intake/exhaust of the cells, but also to reduce a package of the valves.

In one aspect, the present disclosure provides a pneumatic control apparatus for a vehicle seat, the pneumatic control apparatus including a case part including a pneumatic flow path and a plurality of nipples, wherein the pneumatic flow path forms a supply path for air supplied from a pneumatic supply part, and the plural nipples are respectively connected to different operating cells, a flow path control valve part including a first valve intake port and a pair of first valve discharge ports, wherein the first valve intake port is mounted in the case part and is connected to the pneumatic flow path in a first direction and a second direction, respectively, and the pair of first valve discharge ports is connected to the first valve intake port and is configured to be openable and closable, and intake/exhaust control valve parts respectively disposed on opposite sides of the flow path control valve part, each of the intake/exhaust control valve parts including second valve intake ports and second valve discharge ports, wherein the second valve intake ports are respectively connected to the first valve discharge ports, and the second valve discharge ports are respectively connected to the second valve intake ports and are configured to be openable and closable, and wherein each of the intake/exhaust control valve parts allows the air, through the second valve discharge ports, to be introduced into the operating cells or to be exhausted therefrom in the first direction and the second direction.

In a preferred embodiment, the pneumatic flow path may be formed at a boundary between the first direction and the second direction and may guide the air to fill an inside of the flow path control valve part through the first valve intake port.

In another preferred embodiment, the flow path control valve part may include a main body including the pair of first valve discharge ports respectively connected to the second valve intake ports in the first direction and the second direction, armatures movably mounted in the main body, the armatures being each formed to shield a corresponding one of the first valve discharge ports, and elastic members each configured to provide elastic force to a corresponding one of the armatures so as to move the corresponding armature in a direction of shielding a corresponding one of the first valve discharge ports.

In still another preferred embodiment, each of the armatures may move, upon receiving relatively stronger force than the elastic force of a corresponding one of the elastic members, so as to open the corresponding one of the first valve discharge ports.

In yet another preferred embodiment, the main body may include conductors each configured to selectively apply, to the corresponding one of the armatures, relatively stronger electromagnetic force than the elastic force of the corresponding one of the elastic members.

In still yet another preferred embodiment, the intake/exhaust control valve part may include a main body including the second valve intake ports, the second valve discharge ports, and valve exhaust ports each configured to selectively discharge the air from the operating cells, armatures movably mounted in the main body, the armatures being each formed to shield a corresponding one of the valve exhaust ports, and elastic members each configured to provide elastic force to a corresponding one of the armatures so as to move the corresponding armature in a direction of shielding a corresponding one of the valve exhaust ports.

In a further preferred embodiment, the armatures may include first shape parts each formed to contact a corresponding one of partition members provided in the main body, and second shape parts each connected to a corresponding one of the first shape parts, wherein each of the second shape parts may form a discharge path connected to a corresponding one of the valve exhaust ports and configured to allow the air discharged from a corresponding one of the second valve discharge ports to be discharged therethrough.

In another further preferred embodiment, in each of the armatures, each of the first shape parts may move, upon receiving relatively stronger force than the elastic force of a corresponding one of the elastic members, so as to be spaced apart from the corresponding one of the partition members, thereby selectively opening the discharge path.

In still another further preferred embodiment, each of the armatures may block, when each of the first shape parts is spaced apart from the corresponding one of the partition members, a corresponding one of discharge paths respectively formed from the second valve intake ports toward the second valve discharge ports.

In yet another further preferred embodiment, the main body may include conductors each configured to selectively apply, to the corresponding one of the armatures, relatively stronger electromagnetic force than the elastic force of the corresponding one of the elastic members.

In still yet another further preferred embodiment, the intake/exhaust control valve parts may perform, in the first direction, intake/exhaust control on the operating cells respectively disposed at different positions and configured to have the same seat configurations.

In a still further preferred embodiment, the intake/exhaust control valve parts may perform, in the second direction, the intake/exhaust control on the operating cells respectively disposed at the different positions and configured to have the same seat configurations, independently of the first direction.

Other aspects and preferred embodiments of the disclosure are discussed infra.

It is understood that the terms "vehicle", "vehicular", and other similar terms as used herein are inclusive of motor vehicles in general, such as passenger automobiles including sport utility vehicles (SUV), buses, trucks, various commercial vehicles, watercraft including a variety of boats and ships, aircraft, and the like, and include hybrid vehicles, electric vehicles, plug-in hybrid electric vehicles, hydrogen-powered vehicles, and other alternative fuel vehicles (e.g., fuels derived from resources other than petroleum). As referred to herein, a hybrid vehicle is a vehicle that has two or more sources of power, for example, vehicles powered by both gasoline and electricity.

The above and other features of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is a diagram showing a configuration of a pneumatic control apparatus for a vehicle seat according to an embodiment of the present disclosure;
FIG. 2 is a diagram showing an installation state of a flow path control valve part and an intake/exhaust control valve part in the pneumatic control apparatus for the vehicle seat according to the embodiment of the present disclosure;
FIG. 3, FIG. 4, and FIG. 6 are diagrams showing a flow path control valve part in the pneumatic control apparatus for the vehicle seat according to the embodiment of the present disclosure;
FIG. 5 is a cross-sectional view taken along line A-A' in FIG. 4 and shows the flow path control valve part in the pneumatic control apparatus for the vehicle seat according to the embodiment of the present disclosure;
FIG. 7 is a cross-sectional view taken along line B-B' in FIG. 6 and shows the flow path control valve part in the pneumatic control apparatus for the vehicle seat according to the embodiment of the present disclosure;
FIG. 8 and FIG. 9 are diagrams showing an intake/exhaust control valve part in the pneumatic control apparatus for the vehicle seat according to the embodiment of the present disclosure;
FIG. 10 is a cross-sectional view taken along line C-C' in FIG. 9 and shows the flow path control valve part in the pneumatic control apparatus for the vehicle seat according to the embodiment of the present disclosure;
FIG. 11 is a diagram showing a case part in the pneumatic control apparatus for the vehicle seat according to the embodiment of the present disclosure; and
FIG. 12 is a cross-sectional view taken along line D-D' in FIG. 11 and shows intake of operating cells respectively disposed at different positions in the pneumatic control apparatus for the vehicle seat according to the embodiment of the present disclosure.

It should be understood that the appended drawings are not necessarily to scale, presenting a somewhat simplified representation of various preferred features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, reference will be made in detail to various embodiments of the present disclosure, examples of which are illustrated in the accompanying drawings and described below.

Advantages and features of the present disclosure and a method of achieving the same will become more apparent with reference to the embodiments described below in detail and the accompanying drawings.

However, the present disclosure is not limited by the embodiments disclosed below, and may be implemented in various forms. The embodiments are provided to ensure that the disclosure of the present disclosure is complete, and to fully inform the scope of the disclosure to those skilled in the art to which the present disclosure pertains, and the present disclosure is only defined by the scope of the claims.

In describing the embodiments disclosed herein, when it is determined that a detailed description of publicly known techniques to which the disclosure pertains may obscure the gist of the present disclosure, the detailed description thereof will be omitted.

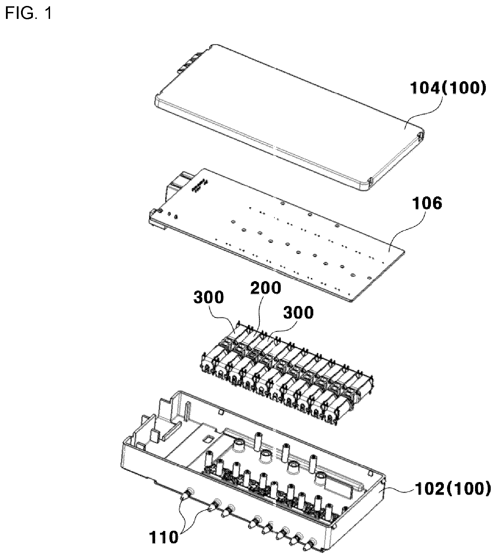

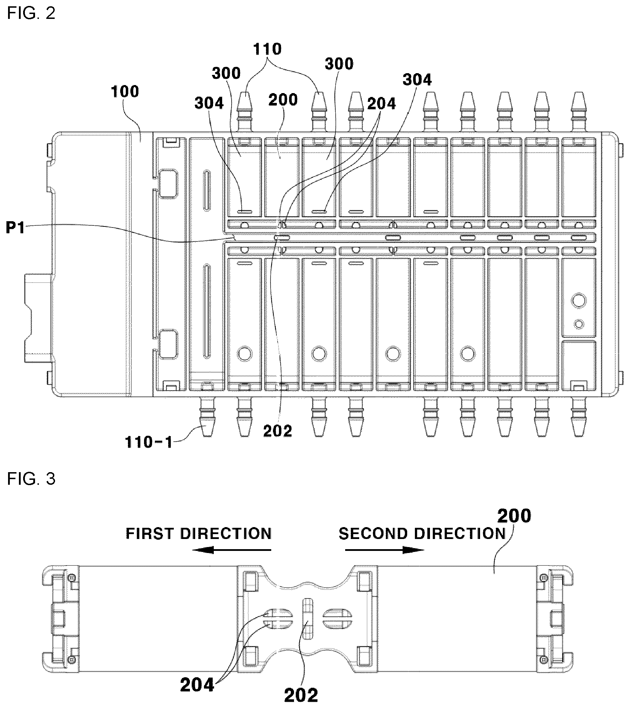

FIG. 1 is a diagram showing a configuration of a pneumatic control apparatus for a vehicle seat according to an embodiment of the present disclosure, FIG. 2 is a diagram showing an installation state of a flow path control valve part and an intake/exhaust control valve part in the pneumatic control apparatus for the vehicle seat according to the embodiment of the present disclosure.

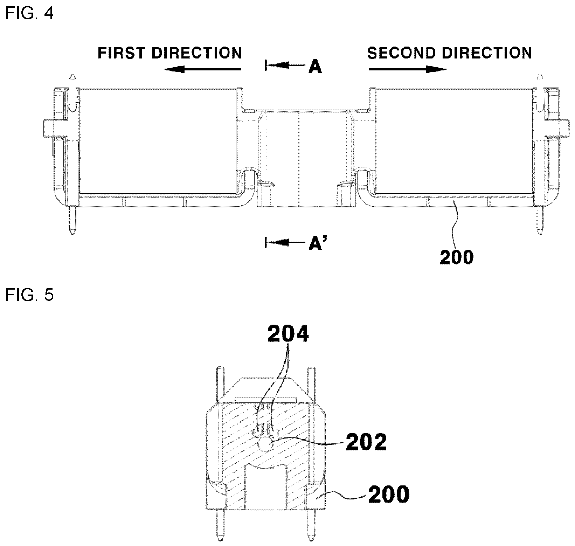

FIG. 3, FIG. 4, and FIG. 6 are diagrams showing a flow path control valve part in the pneumatic control apparatus for the vehicle seat according to the embodiment of the present disclosure, and FIG. 5 is a cross-sectional view taken along line A-A' in FIG. 4 and shows the flow path control valve part in the pneumatic control apparatus for the vehicle seat according to the embodiment of the present disclosure.

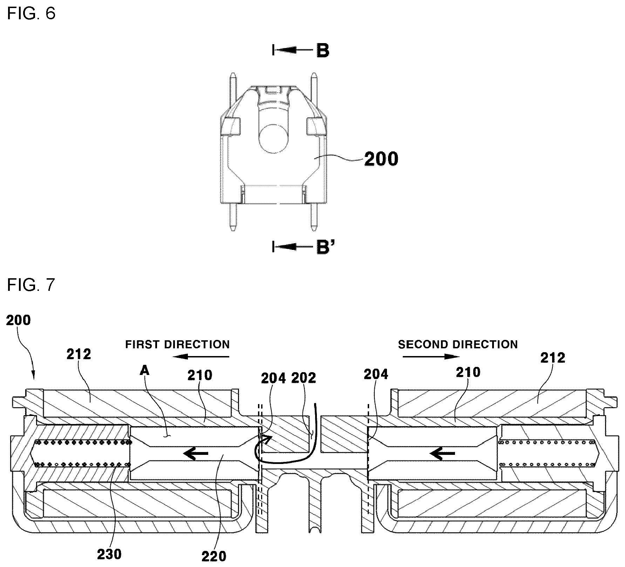

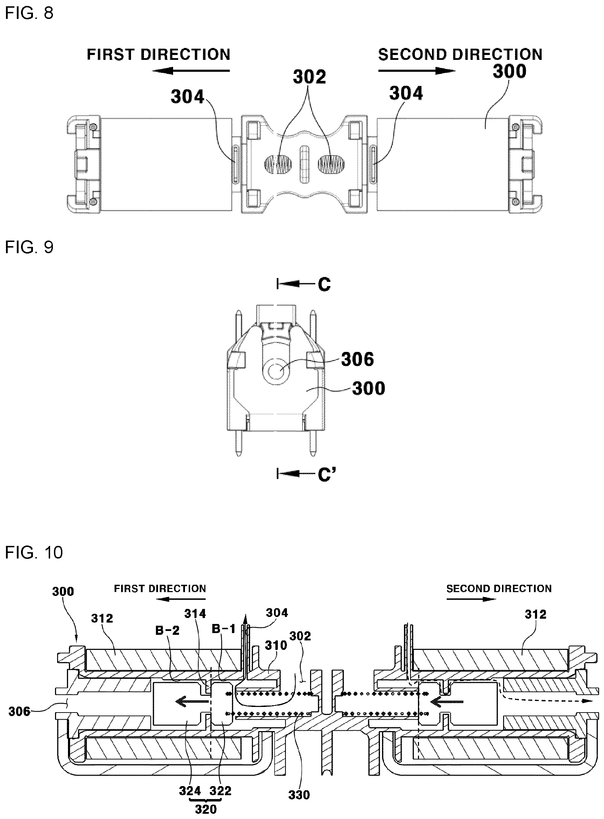

FIG. 7 is a cross-sectional view taken along line B-B' in FIG. 6 and shows the flow path control valve part in the pneumatic control apparatus for the vehicle seat according to the embodiment of the present disclosure, FIG. 8 and FIG. 9 are diagrams showing an intake/exhaust control valve part in the pneumatic control apparatus for the vehicle seat according to the embodiment of the present disclosure, and FIG. 10 is a cross-sectional view taken along line C-C' in FIG. 9 and shows the flow path control valve part in the pneumatic control apparatus for the vehicle seat according to the embodiment of the present disclosure.

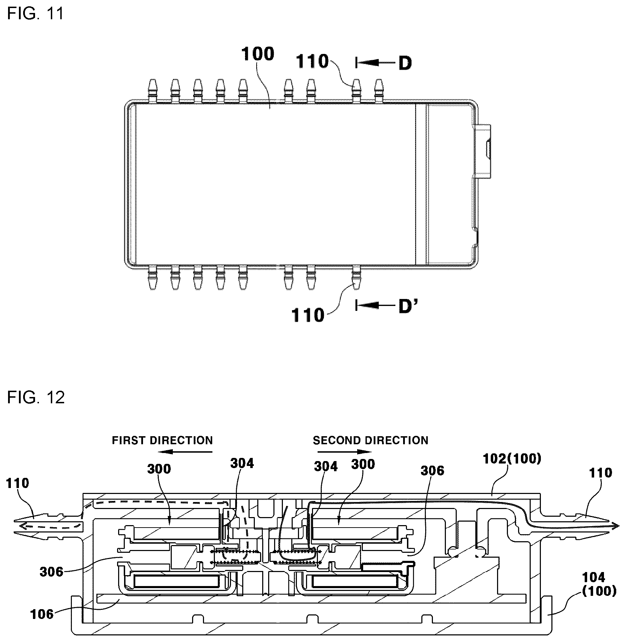

FIG. 11 is a diagram showing a case part in the pneumatic control apparatus for the vehicle seat according to the embodiment of the present disclosure, and FIG. 12 is a cross-sectional view taken along line D-D' in FIG. 11 and shows intake of operating cells respectively disposed at different positions in the pneumatic control apparatus for the vehicle seat according to the embodiment of the present disclosure.

As shown in FIGs. 1 and 2, the pneumatic control apparatus for the vehicle seat according to the embodiment includes a case part 100, a flow path control valve part 200, and an intake/exhaust control valve part 300.

The case part 100 is formed to supply air to the inside thereof from any one of a plurality of nipples 110, more specifically, a pneumatic supply part (not shown) connected to a nipple 110-1 located on the entrance side in FIG. 2.

To this end, the case part 100 has a pneumatic flow path P1 provided therein and configured to form a predetermined supply path for air supplied through the nipple 110-1, as described above.

Preferably, the pneumatic flow path P1 is formed at a boundary between a first direction and a second direction and guides air to fill the inside of the flow path control valve part 200 through a first valve intake port 202 formed in the flow path control valve part 200.

More preferably, the pneumatic flow path P1 is formed in the case part 100. Here, when air is supplied through the pneumatic supply part (not shown) provided with a pump or the like, the pneumatic flow path P1 allows air to flow into the first valve intake port 202, thereby maintaining a state in which the flow path control valve part 200 is filled with air.

Further, the case part 100 is formed by combining a lower case 102 with an upper case 104 so as to provide an internal area formed therein with a predetermined size and configured to accommodate the flow path control valve part 200 and the intake/exhaust control valve part 300.

In addition, the case part 100 has a controller PCB 106 mounted in the internal area thereof and configured to control the flow path control valve part 200 and the intake/exhaust control valve part 300.

The flow path control valve part 200 and the intake/exhaust control valve part 300 are mounted in the case part 100.

As shown in FIGs. 3 and 5, the flow path control valve part 200 includes the first valve intake port 202 and a pair of first valve discharge ports 204 connected to the first valve intake port 202 and respectively provided in the first and second directions, in which the pair of first valve discharge ports 204 is configured to be open and closed.

Here, the flow path control valve part 200 includes a main body 210, an armature 220, and an elastic member 230, as shown in FIG. 7.

The main body 210 is filled with air supplied from the pneumatic flow path P1 through the first valve intake port 202 and is provided with the pair of first valve discharge ports 204 each connected to a corresponding one of second valve intake ports 302 respectively provided in the first and second directions.

The main body 210 extends from the first valve intake port 202 in the first and second directions and is mounted in the case part 100.

The armatures 220 are movably mounted in a mounting area A of the main body 210 and are formed to respectively shield the first valve discharge ports 204.

In addition, the elastic member 230 provides elastic force to the armature 220 in the mounting area A and moves the armature 220 in a direction of shielding the first valve discharge port 204, as shown in the second direction of FIG. 7.

Here, as shown in FIG. 7, the armature 220 may be moved in the first direction by force relatively stronger than elastic force of the elastic member 230, thereby opening the first valve discharge port 204.

More specifically, the main body 210 is provided with a conductor 212. For example, when a user performs a control operation to allow air to be introduced into an operating cell, electromagnetic force relatively stronger than elastic force of the elastic member 230 is selectively applied to the armature 220. Thereafter, the armature 220 moves in the mounting area A while compressing the elastic member 230, thereby opening the first valve discharge port 204.

As described above, when the first valve discharge port 204 is opened, air may move to the intake/exhaust control valve part 300. Accordingly, opening and closing of the intake/exhaust control valve part 300 may be controlled so as to allow air to be introduced into the operating cell or to be exhausted therefrom.

As shown in FIGs. 1 and 2, the intake/exhaust control valve parts 300 are disposed in parallel and are respectively located on opposite sides of the flow path control valve part 200.

As shown in FIG. 8, the intake/exhaust control valve part 300 includes the second valve intake port 302 connected to the first valve discharge port 204, and a second valve discharge port 304 connected to the second valve intake port 302 and configured to be opened and closed.

Accordingly, the intake/exhaust control valve part 300 may allow air to be introduced into the operating cell or to be exhausted therefrom in the first and second directions through the second valve discharge port 304.

In other words, the intake/exhaust control valve part 300 may open the second valve discharge port 304 so as to allow air to be introduced into the operating cell. Further, the intake/exhaust control valve part 300 may selectively allow air to be exhausted from the operating cell by opening a valve exhaust port 306 in a state in which air is not allowed to flow into the second valve discharge port 304.

To this end, the intake/exhaust control valve part 300 includes a main body 310, an armature 320, and an elastic member 330, as shown in FIG. 10.

The main body 310 includes the second valve intake port 302, the second valve discharge port 304, and the valve exhaust port 306 configured to selectively discharge air from the operating cell.

The main body 310 is connected to the flow path control valve part 200 through a pair of first valve discharge ports 204 on opposite sides of the flow path control valve part 200 and selectively allows air to be introduced thereinto when the first valve discharge port 204 is opened.

The main body 310 extends in the first and second directions in the same manner as the flow path control valve part 200 and is mounted in the case part 100.

Additionally, the armature 320 is movably mounted in the main body 310 and is formed to shield the valve exhaust port 306.

The armature 320 has a first shape part 322 and a second shape part 324.

The first shape part 322 is mounted to contact a partition member 314 provided in the main body 310. Here, the first shape part 322 opens the second valve discharge port 304 and shields the valve exhaust port 306 at an initial position thereof.

Additionally, the second shape part 324 is connected to the first shape part 322 and selectively forms a discharge path that allows air discharged from the second valve discharge port 304 to move to the valve exhaust port 306.

That is, the elastic member 330 provides elastic force to the first shape part 322 in a mounting area B-1, thereby moving, as shown in the first direction of FIG. 10, the armature 320 in a direction in which the valve exhaust port 306 is shielded, more specifically, in a direction in which the first shape part 322 is in contact with the partition member 314.

In addition, as shown in the second direction of FIG. 10, the armature 320 may be moved when force relatively stronger than elastic force of the elastic member 330 is applied to the armature 320, thereby opening the valve exhaust port 306.

More specifically, the main body 310 is provided with a conductor 312. For example, when a user performs a control operation to exhaust air from the operating cell, electromagnetic force relatively stronger than elastic force of the elastic member 330 is selectively applied to the armature 320. Thereafter, the first shape part 322 moves in the mounting area B-1 while compressing the elastic member 330. That is, the first shape part 322 is spaced apart from the partition member 314 so as to open the valve exhaust port 306, thereby allowing air to be exhausted in a direction indicated by an arrow in the second direction of FIG. 10.

As described above, when the valve exhaust port 306 is opened, air may be discharged from a mounting area B-2 along the second shaped part 324 in a state in which air is not allowed to flow into the second valve discharge port 304. Accordingly, opening and closing of the intake/exhaust control valve part 300 may be controlled so as to allow air to be exhausted from the operating cell.

Meanwhile, as shown in FIG. 2, the intake/exhaust control valve part 300 may perform intake/exhaust control on operating cells having the same configuration in the first direction through opening and closing control thereof. For example, the intake/exhaust control valve part 300 may perform intake/exhaust control on operating cells respectively disposed at an upper portion of a lumbar support and a lower portion thereof. In addition, the intake/exhaust control valve part 300 may perform intake/exhaust control on operating cells having the same seat configurations in the second direction, independently of the first direction. For example, the intake/exhaust control valve part 300 may perform intake/exhaust control on operating cells respectively disposed at an inner portion of a seat cushion and an outer portion thereof.

That is, the first direction and the second direction are opposite each other with respect to the pneumatic flow path P. Accordingly, in the first direction, intake (exhaust) control may be performed on operating cells respectively disposed at different positions and configured to have the same seat configurations (in the direction of a dotted arrow in FIG. 12). Further, in the second direction, intake (exhaust) control may be performed on operating cells respectively disposed at different positions and configured to have the same seat configurations, independently of the first direction (in the direction of a solid arrow in FIG. 12).

According to this configuration, in the present embodiment, through three valves including one flow path control valve part 200 and the pair of intake/exhaust control valve parts 300 respectively connected to opposite sides of the flow path control valve part 200, air intake/exhaust control may be performed on four operating cells respectively connected to the nipples 110, such as operating cells respectively disposed at different positions in one seat and operating cells respectively disposed at different positions in the other seat.

In the related art, intake/exhaust control for one operating cell is performed through one valve. For example, when three valves are provided as in the present embodiment, intake/exhaust control may be performed for three operating cells in the related art.

Meanwhile, in the present embodiment, as described above, since intake/exhaust control is performed for four operating cells using three valves, it is possible to control intake/exhaust for a larger number of operating cells with fewer valves than in the related art. Accordingly, it is possible to reduce the number of components adopted to perform intake/exhaust control on a plurality of operating cells, thereby reducing manufacturing costs.

In addition, in the present embodiment, at the initial state, the flow path control valve part 200 and the intake/exhaust control valve part 300 are located so as to block the first valve discharge port 204 and the valve exhaust port 306 by elastic force respectively supplied from the elastic members 230 and 330 (refer to FIGs. 7 and 10). In this case, when no user operation is performed, internal pneumatic pressure is maintained. In other words, since intake/exhaust control is not performed, it is not necessary to use additional power to maintain pneumatic pressure, thereby reducing power consumption.

According to the present disclosure, an intake/exhaust operation and a maintenance operation are selectively performed by controlling opening and closing of a flow path in one coil connected to cells respectively disposed in different seats, thereby making it possible not only to reduce the number of valves adopted to perform intake/exhaust control on cells, but also to have an effect of reducing the size of a package of the valves.

Accordingly, in the present disclosure, it is possible to reduce the number of valves adopted to perform intake/exhaust control on cells, thereby having an effect of reducing manufacturing costs.

The present disclosure has been described in detail with reference to preferred embodiments shown in the drawings, but the embodiments are merely illustrative. It will be appreciated by those skilled in the art that various modifications may be made from the embodiments, and all or a part of the embodiments may be selectively combined with each other. Therefore, the true technical protection scope of the present disclosure should be defined by the appended claims.

## Claims

1. A pneumatic control apparatus for a vehicle seat, the pneumatic control apparatus comprising:
a case part (100) comprising a pneumatic flow path (P1) and a plurality of nipples (110), wherein the pneumatic flow path forms a supply path for air supplied from a pneumatic supply part, and the plural nipples are respectively connectable to different operating cells; the pneumatic control apparatus being **characterised by** further comprising:
a flow path control valve part (200) comprising a first valve intake port (202) and a pair of first valve discharge ports (204), wherein the first valve intake port is mounted in the case part and is connected to the pneumatic flow path in a first direction and a second direction, respectively, and the pair of first valve discharge ports is connected to the first valve intake port and is configured to be openable and closable; and
intake/exhaust control valve parts (300) respectively disposed on opposite sides of the flow path control valve part, each of the intake/exhaust control valve parts comprising second valve intake ports (302) and second valve discharge ports (304), wherein the second valve intake ports are respectively connected to the first valve discharge ports, and the second valve discharge ports are respectively connected to the second valve intake ports and are configured to be openable and closable, and wherein each of the intake/exhaust control valve parts allows the air, through the second valve discharge ports, to be introduced into the operating cells or to be exhausted therefrom in the first direction and the second direction.

2. The pneumatic control apparatus of claim 1, wherein the pneumatic flow path is formed at a boundary between the first direction and the second direction and guides the air to fill an inside of the flow path control valve part through the first valve intake port.

3. The pneumatic control apparatus of claim 1 or 2, wherein the flow path control valve part comprises:
a main body (210) comprising the pair of first valve discharge ports respectively connected to the second valve intake ports in the first direction and the second direction;
armatures (220) movably mounted in the main body, the armatures being each formed to shield a corresponding one of the first valve discharge ports; and
elastic members (230) each configured to provide elastic force to a corresponding one of the armatures so as to move the corresponding armature in a direction of shielding a corresponding one of the first valve discharge ports.

4. The pneumatic control apparatus of claim 3, wherein each of the armatures moves, upon receiving relatively stronger force than the elastic force of a corresponding one of the elastic members, so as to open the corresponding one of the first valve discharge ports.

5. The pneumatic control apparatus of claim 3 or 4, wherein the main body comprises conductors each configured to selectively apply, to the corresponding one of the armatures, relatively stronger electromagnetic force than the elastic force of the corresponding one of the elastic members.

6. The pneumatic control apparatus of one of claims 1-5, wherein the intake/exhaust control valve part comprises:
a main body comprising the second valve intake ports, the second valve discharge ports, and valve exhaust ports each configured to selectively discharge the air from the operating cells;
armatures movably mounted in the main body, the armatures being each formed to shield a corresponding one of the valve exhaust ports; and
elastic members each configured to provide elastic force to a corresponding one of the armatures so as to move the corresponding armature in a direction of shielding a corresponding one of the valve exhaust ports.

7. The pneumatic control apparatus of claim 6, wherein the armatures comprise:
first shape parts each formed to contact a corresponding one of partition members provided in the main body; and
second shape parts each connected to a corresponding one of the first shape parts, wherein each of the second shape parts forms a discharge path connected to a corresponding one of the valve exhaust ports and configured to allow the air discharged from a corresponding one of the second valve discharge ports to be discharged therethrough.

8. The pneumatic control apparatus of claim 7, wherein, in each of the armatures, each of the first shape parts moves, upon receiving relatively stronger force than the elastic force of a corresponding one of the elastic members, so as to be spaced apart from the corresponding one of the partition members, thereby selectively opening the discharge path.

9. The pneumatic control apparatus of claim 7 or 8, wherein each of the armatures blocks, when each of the first shape parts is spaced apart from the corresponding one of the partition members, a corresponding one of discharge paths respectively formed from the second valve intake ports toward the second valve discharge ports.

10. The pneumatic control apparatus of one of claims 6-9, wherein the main body comprises conductors each configured to selectively apply, to the corresponding one of the armatures, relatively stronger electromagnetic force than the elastic force of the corresponding one of the elastic members.

11. The pneumatic control apparatus of one of claims 1-10, wherein the intake/exhaust control valve parts perform, in the first direction, intake/exhaust control on the operating cells respectively disposed at different positions and configured to have the same seat configurations.

12. The pneumatic control apparatus of claim 11, wherein the intake/exhaust control valve parts perform, in the second direction, the intake/exhaust control on the operating cells respectively disposed at the different positions and configured to have the same seat configurations, independently of the first direction.

## Patentansprüche

1. Pneumatik-Steuervorrichtung für einen Fahrzeugsitz, wobei die Pneumatik-Steuervorrichtung aufweist:
einen Gehäuseteil (100), der einen Pneumatik-Strömungspfad (P1) und eine Mehrzahl von Nippeln (110) aufweist, wobei der Pneumatik-Strömungspfad einen Zuführpfad für Luft bildet, die von einem Pneumatik-Zuführteil aus zugeführt wird, und wobei die mehreren Nippel jeweils mit unterschiedlichen Arbeitszellen verbindbar sind, wobei die Pneumatik-Steuervorrichtung **dadurch gekennzeichnet ist, dass** sie ferner aufweist:
einen Strömungspfad-Steuerventilteil (200), der eine erste Ventileinlassöffnung (202) und ein Paar erste Ventilauslassöffnungen (204) aufweist, wobei die erste Ventileinlassöffnung in dem Gehäuseteil angebracht ist und mit dem Pneumatik-Strömungspfad verbunden ist in einer ersten Richtung bzw. in einer zweiten Richtung, wobei das Paar erste Ventilauslassöffnungen mit der ersten Ventileinlassöffnung verbunden ist und konfiguriert ist, um geöffnet und geschlossen werden zu können, und
Einlass/Auslass-Steuerventilteile (300), die zugeordnet auf entgegengesetzten Seiten des Strömungspfad-Steuerventilteils angeordnet sind, wobei jeder der Einlass/Auslass-Steuerventilteile zweite Ventileinlassöffnungen (302) und zweite Ventilauslassöffnungen (304) aufweist, wobei die zweiten Ventileinlassöffnungen zugeordnet mit den ersten Ventilauslassöffnungen verbunden sind, und wobei die zweiten Ventilauslassöffnungen zugeordnet mit den zweiten Ventileinlassöffnungen verbunden sind und konfiguriert sind, um geöffnet und geschlossen werden zu können, und wobei jeder von den Einlass/Auslass-Steuerventilteilen es der Luft ermöglicht, durch die zweiten Ventilauslassöffnungen hindurch, in die Arbeitszellen eingebracht zu werden oder aus diesen abgeführt zu werden in die erste Richtung und in die zweite Richtung.

2. Pneumatik-Steuervorrichtung gemäß Anspruch 1, wobei der Pneumatik-Strömungspfad an einer Grenze zwischen der ersten Richtung und der zweiten Richtung ausgebildet ist und die Luft führt, um ein Inneres des Strömungspfad-Steuerventilteils durch die erste Ventileinlassöffnung hindurch zu füllen.

3. Pneumatik-Steuervorrichtung gemäß Anspruch 1 oder 2, wobei der Strömungspfad-Steuerventilteil aufweist:
einen Hauptkörper (210), der das Paar erste Ventilauslassöffnungen aufweist, die zugeordnet mit den zweiten Ventileinlassöffnungen in der ersten Richtung und der zweiten Richtung verbunden sind,
Anker (220), die in dem Hauptkörper bewegbar angebracht sind, wobei die Anker jeweils ausgebildet sind, um eine korrespondierende von den ersten Ventilauslassöffnungen abzudecken, und
Elastikelemente (230), die jeweils konfiguriert sind, um eine Elastikkraft an einen korrespondierenden von den Ankern bereitzustellen, um den korrespondierenden Anker in einer Richtung zum Abdecken einer korrespondierenden von den ersten Ventilauslassöffnungen zu bewegen.

4. Pneumatik-Steuervorrichtung gemäß Anspruch 3, wobei jeder von den Ankern sich bewegt auf das Empfangen einer Kraft, die relativ stärker ist als die Elastikkraft eines korrespondierenden von den Elastikelementen, um die korrespondierende von den ersten Ventilauslassöffnungen zu öffnen.

5. Pneumatik-Steuervorrichtung gemäß Anspruch 3 oder 4, wobei der Hauptkörper Konduktoren aufweist, die jeweils konfiguriert sind, um selektiv auf den korrespondierenden von den Ankern eine elektromagnetische Kraft aufzubringen, die relativ stärker ist als die Elastikkraft des korrespondierenden von den Elastikelementen.

6. Pneumatik-Steuervorrichtung gemäß einem der Ansprüche 1-5, wobei der Einlass/Auslass-Steuerventilteil aufweist:
einen Hauptkörper, der die zweiten Ventileinlassöffnungen, die zweiten Ventilauslassöffnungen und Ventilabführöffnungen aufweist, die jeweils konfiguriert sind, um selektiv die Luft aus den Arbeitszellen auszulassen,
Anker, die in dem Hauptkörper bewegbar angebracht sind, wobei die Anker jeweils ausgebildet sind, um eine korrespondierende der Ventilabführöffnungen abzudecken, und
Elastikelemente, von denen jedes konfiguriert ist, um eine Elastikkraft an einen korrespondierenden von den Ankern bereitzustellen, um den korrespondierenden Anker in eine Richtung zum Abdecken einer korrespondierenden von den Ventilabführöffnungen.

7. Pneumatik-Steuervorrichtung gemäß Anspruch 6, wobei die Anker aufweisen: erste-Gestalt-Teile, die jeweils ausgebildet sind, um ein korrespondierendes von Trennelementen zu kontaktieren, die in dem Hauptkörper bereitgestellt sind, und zweite-Gestalt-Teile, die jeweils mit einem korrespondierenden von den erste-Gestalt-Teilen verbunden sind, wobei jeder von den zweite-Gestalt-Teilen einen Auslasspfad bildet, der mit einer korrespondierenden von den Ventilabführöffnungen verbunden ist und konfiguriert ist, um es der Luft, die von einer korrespondierenden von den zweiten Ventilauslassöffnungen ausgelassen wird, zu ermöglichen, durch ihn hindurch ausgelassen zu werden.

8. Pneumatik-Steuervorrichtung gemäß Anspruch 7, wobei in jedem von den Ankern jeder von den erste-Gestalt-Teilen sich bewegt auf ein Empfangen einer Kraft, die relativ stärker ist, als die Elastikkraft eines korrespondierenden von den Elastikelementen, um von dem korrespondierenden von den Trennelementen in Abstand gebracht zu werden, wodurch der Auslasspfad selektiv geöffnet wird.

9. Pneumatik-Steuervorrichtung gemäß Anspruch 7 oder 8, wobei jeder von den Ankern, wenn jeder von den erste-Gestalt-Teilen von dem korrespondierenden von den Trennelemente im Abstand ist, einen korrespondierenden von Auslasspfaden blockiert, die jeweils von den zweiten Ventileinlassöffnungen aus zu den zweiten Ventilauslassöffnungen hin ausgebildet sind.

10. Pneumatik-Steuervorrichtung gemäß einem der Ansprüche 6-9, wobei der Hauptkörper Konduktoren aufweist, die jeweils konfiguriert sind, um selektiv auf den korrespondierenden von den Ankern eine elektromagnetische Kraft auszuüben, die relativ stärker ist als die Elastikkraft des korrespondierenden von den Elastikelementen.

11. Pneumatik-Steuervorrichtung gemäß einem der Ansprüche 1-10, wobei die Einlass/Auslass-Steuerventilteile in der ersten Richtung eine Einlass/Auslass-Steuerung bei den Arbeitszellen durchführen, die jeweils an unterschiedlichen Positionen angeordnet sind und konfiguriert sind, um die gleichen Sitzkonfigurationen zu haben.

12. Pneumatik-Steuervorrichtung gemäß Anspruch 11, wobei die Einlass/Auslass-Steuerventilteile in der zweiten Richtung die Einlass/Auslass-Steuerung bei den Arbeitszellen durchführen, die jeweils an den unterschiedlichen Positionen angeordnet sind und konfiguriert sind, um die gleichen Sitzkonfigurationen zu haben, unabhängig von der ersten Richtung.

## Revendications

1. Dispositif de commande pneumatique pour un siège de véhicule, le dispositif de commande pneumatique comprenant :
une partie de boîtier (100) comportant un chemin d'écoulement pneumatique (P1) et une pluralité de raccords (110), le chemin d'écoulement pneumatique formant un chemin d'alimentation pour l'air fourni depuis une partie d'alimentation pneumatique, et les plusieurs raccords pouvant être reliés respectivement à différentes cellules opérationnelles, le dispositif de commande pneumatique étant **caractérisé en ce qu'**il comprend en outre :
une partie de vanne de commande de chemin d'écoulement (200) comprenant un premier orifice d'admission de vanne (202) et une paire de premiers orifices de décharge de vanne (204), le premier orifice d'admission de vanne étant monté dans la partie de boîtier et relié au chemin d'écoulement pneumatique dans une première direction et dans une deuxième direction, respectivement, et la paire de premiers orifices de décharge de vanne étant reliés au premier orifice d'admission de vanne et étant configurés pour pouvoir être ouverts et fermés, et
des parties de vanne de commande d'admission/d'évacuation (300) disposées respectivement sur des côtés opposés de la partie de vanne de commande de chemin d'écoulement, chacune des parties de vanne de commande d'admission/d'évacuation comportant des deuxièmes orifices d'admission de vanne (302) et des deuxièmes orifices de décharge de vanne (304), les deuxièmes orifices d'admission de vanne étant reliés respectivement aux premiers orifices de décharge de vanne, et les deuxièmes orifices de décharge de vanne étant reliés respectivement aux deuxièmes orifices d'admission de vanne et étant configurés pour pouvoir être ouverts et fermés, et chacune des parties de vanne de commande d'admission/d'évacuation permettant à l'air d'être introduit dans les cellules opérationnelles ou d'en être évacué à travers les deuxièmes orifices de décharge de vanne dans la première direction et dans la deuxième direction.

2. Dispositif de commande pneumatique selon la revendication 1, dans lequel le chemin d'écoulement pneumatique est formé à une limite entre la première direction et la deuxième direction et guide l'air de manière à remplir un intérieur de la partie de vanne de commande de chemin d'écoulement à travers le premier orifice d'admission de vanne.

3. Dispositif de commande pneumatique selon la revendication 1 ou 2, dans lequel la partie de vanne de commande de chemin d'écoulement comprend :
un corps principal (210) comportant la paire de premiers orifices de décharge de vanne reliés respectivement aux deuxièmes orifices d'admission de vanne dans la première direction et dans la deuxième direction,
des ancrages (220) montés de manière mobile dans le corps principal, les ancrages étant chacun formés pour couvrir un correspondant des premiers orifices de décharge de vanne, et
des éléments élastiques (230) configurés chacun pour fournir une force élastique à l'un correspondant des ancrages de manière à déplacer l'ancrage correspondant dans une direction pour couvrir un correspondant des premiers orifices de décharge de vanne.

4. Dispositif de commande pneumatique selon la revendication 3, dans lequel chacun des ancrages se déplace lorsqu'il reçoit une force relativement plus forte que la force élastique d'un correspondant des éléments élastiques, afin d'ouvrir ledit un correspondant des premiers orifices de décharge de vanne.

5. Dispositif de commande pneumatique selon la revendication 3 ou 4, dans lequel le corps principal comporte des conducteurs qui sont chacun configurés pour appliquer de manière sélective audit l'un correspondant des ancrages une force électromagnétique qui est relativement plus forte que la force élastique dudit l'un correspondant des éléments élastiques.

6. Dispositif de commande pneumatique selon l'une des revendications 1 à 5, dans lequel la partie de vanne de commande d'admission/d'évacuation comprend :
un corps principal comportant les deuxièmes orifices d'admission de vanne, les deuxièmes orifices de décharge de vanne et des orifices d'évacuation de vanne, qui sont chacun configurés pour décharger sélectivement l'air des cellules opérationnelles,
des ancrages montés de manière mobile dans le corps principal, lesdits ancrages étant chacun formé pour couvrir un correspondant des orifices d'évacuation de vanne, et
des éléments élastiques, chacun étant configuré pour fournir une force élastique à l'un correspondant des ancrages afin de déplacer l'ancrage correspondant dans une direction couvrant un correspondant des orifices d'évacuation de vanne.

7. Dispositif de commande pneumatique selon la revendication 6, dans lequel les ancrages comprennent :
des parties de première forme, chacune étant formée pour contacter un correspondant parmi des éléments de séparation prévus dans le corps principal, et
des parties de deuxième forme, chacune étant reliée à une correspondante des parties de première forme, chacune des parties de deuxième forme formant un chemin de décharge relié à l'un correspondant des orifices d'évacuation de vanne et étant configuré pour permettre à l'air déchargé depuis l'un correspondant des deuxièmes orifices de décharge de vanne d'être déchargé à travers celui-ci.

8. Dispositif de commande pneumatique selon la revendication 7, dans lequel, dans chacun des ancrages, chacune des parties de première forme se déplace à la réception d'une force relativement plus forte que la force élastique d'un correspondant des éléments élastiques, afin d'être écartée dudit un correspondant des éléments de séparation, ouvrant ainsi de manière sélective le chemin de décharge.

9. Dispositif de commande pneumatique selon la revendication 7 ou 8, dans lequel, lorsque chacune des parties de première forme est écartée dudit un correspondant des éléments de séparation, chacun des ancrages bloque un correspondant de chemins de décharge formés respectivement à partir des deuxièmes orifices d'admission de vanne vers les deuxièmes orifices de décharge de vanne.

10. Dispositif de commande pneumatique selon l'une des revendications 6 à 9, dans lequel le corps principal comporte des conducteurs qui sont chacun configurés pour appliquer de manière sélective, audit un correspondant des ancrages, une force électromagnétique relativement plus forte que la force élastique dudit un correspondant des éléments élastiques.

11. Dispositif de commande pneumatique selon l'une des revendications 1 à 10, dans lequel les parties de vanne de commande d'admission/d'évacuation effectuent, dans la première direction, une commande d'admission/d'évacuation sur les cellules opérationnelles disposées respectivement à des positions différentes et configurées pour présenter les mêmes configurations de siège.

12. Dispositif de commande pneumatique selon la revendication 11, dans lequel les parties de vanne de commande d'admission/d'évacuation effectuent, dans la deuxième direction, la commande d'admission/d'évacuation sur les cellules opérationnelles, respectivement disposées sur les positions différentes et configurées pour présenter les mêmes configurations de siège, indépendamment de la première direction.
